## Europäisches Patentamt
## European Patent Office
## Office européen des brevets

(11) Publication number: **0 058 521**
**B1**

(12) EUROPEAN PATENT SPECIFICATION

(45) Date of publication of patent specification: **08.05.85**

(21) Application number: **82300681.2**

(22) Date of filing: **11.02.82**

(51) Int. Cl.⁴: **G 11 B 15/60**

(54) **Tape guide device.**

(30) Priority: **12.02.81 JP 19257/81**

(43) Date of publication of application:
**25.08.82 Bulletin 82/34**

(45) Publication of the grant of the patent:
**08.05.85 Bulletin 85/19**

(84) Designated Contracting States:
**AT DE FR GB NL**

(56) References cited:
**US-A-3 636 275**
**US-A-3 943 566**

**Patent Abstracts of Japan Vol. 4, 90, 27 June 1980 page 80P17 & JP-55-52552.**

(73) Proprietor: **SONY CORPORATION**
**7-35 Kitashinagawa 6-Chome Shinagawa-ku Tokyo 141 (JP)**

(72) Inventor: **Kawamoto, Hideo**
**2780, Honmachida**
**Machida-shi Kanagawa-ken (JP)**
Inventor: **Uehara, Seigo**
**8-102, 5450, Ohba**
**Fujisawa-shi Kanagawa-ken (JP)**

(74) Representative: **Ayers, Martyn Lewis Stanley et al**
**J.A. KEMP & CO. 14 South Square Gray's Inn London, WC1R 5EU (GB)**

Courier Press, Leamington Spa, England.

## Description

The present invention relates to a tape guide device for guiding a tape around the periphery of a drum.

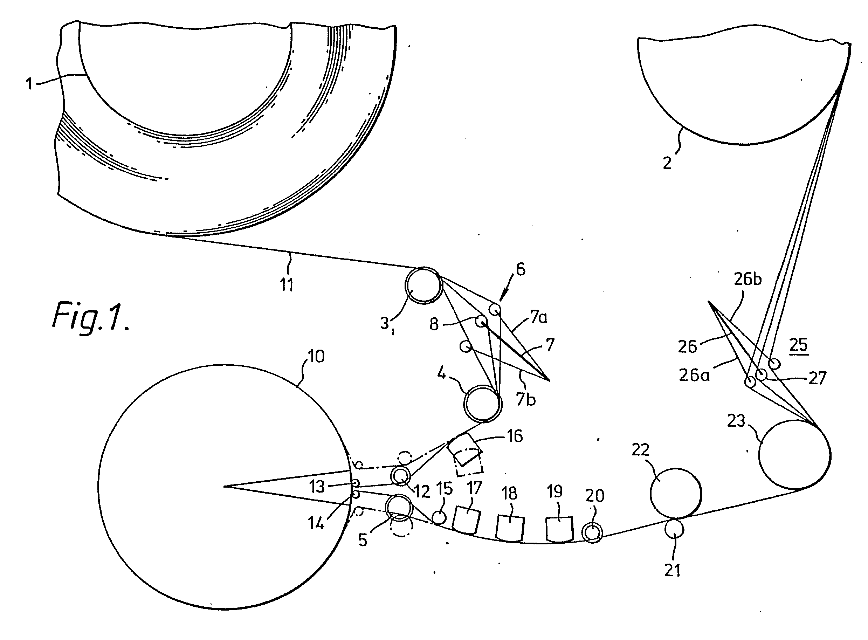

The tape transport system of a broadcasting helical VTR (Video Tape Recorder), having an SMPTE (Society of Motion Picture and Television Engineers) type-C format is generally constructed as shown in Fig. 1 of the accompanying drawings.

In the figure, reference numeral 1 denotes a tape supply side reel base, 2 a tape take-up side reel base and numerals 3 to 5 denote guide rollers, respectively. Numeral 6 designates a tape tension adjusting device placed in the tape supply side which includes a tension arm 7 and a fixed post 8 attached, in this example, at the top thereof. The tension arm 7 is adjusted to stay at a position designated by numeral 7b (slightly to one side of the line tangential to the guide rollers 3 and 4) for minimum tension (0g) and is adjusted to stay at a position designated by numeral 7a (slightly to the other side of the line tangential to the guide rollers 3 and 4) for maximum tension (about 400g).

Numeral 10 represents a rotary drum which is provided with a rotary magnetic head assembly and around which a magnetic tape 11 is wound to form an omega-shape by a guide post 12 having a taper and located at the tape entry side and a pair of tape guides 13 and 14 for restricting the winding angle of the tape. Numeral 15 represents an impedance roller, 16 a head for erasing the full width of the tape, 17 an erasing head for erasing an audio signal in an audio signal track, 18 a recording/reproducing head for recording/reproducing the audio signal and 19 represents a head for monitoring the audio signal.

Also, numeral 20 designates a guide post, 21 a capstan, 22 a pinch roller, 23 a time roller and 25 represents an adjusting device for adjusting the tape tension of the take-up side in which numeral 26 represents a tension arm and 27 denotes a fixed post, which is adjusted to a position denoted by numeral 26a for maximum tension or to a position denoted by numeral 26b for minimum tension.

By the way, in the VTR with the type C format just described, the magnetic tape 11 is wound around the rotary drum 10 in an omega-shaped path, so that the space or distance between the pair of the tape guides 13 and 14 and the space or distance between these tape guides 13, 14 and the peripheral surface of the rotary drum 10 are extremely narrow. Hence, it is quite difficult to put the tape 11 around the rotary drum 10 and in addition, there is the risk that the tape 11 may be damaged during wrapping of the tape around the drum 10.

According to the present invention there is provided a tape guide device in which a tape is omega-wrapped around the periphery of a drum by a pair of tape guides spaced a short distance from the periphery of the drum, the device comprising a fixed base located in a predetermined position relative to the external periphery of the drum and a pair of guide attaching members provided on an upper plane thereof to attach said tape guides, characterised in that the guide attaching members are freely movable relative to said fixed base, and the arrangement is such that while the tape is being wrapped around on said drum, said guide attaching members are moved to be spaced by a predetermined larger distance from said periphery of the drum.

The invention will be further described by way of example with reference to the accompanying drawings in which:—

Figure 1 is a diagram showing one example of a tape transporting system of a VTR used to explain the present invention;

Figure 2 is a plan diagram showing one example of the tape guide device according to the present invention;

Figure 3 is a cross-sectional diagram taken along a line I—I in Figure 2;

Figure 4 is a left side diagram of Figure 2;

Figure 5 is an enlarged longitudinal cross-sectional diagram of a slide plate;

Figure 6 is a diagram of a back side of a fixed base plate;

Figure 7 is a plan diagram showing a state after the slide plates are slid; and

Figure 8 is a longitudinal sectional diagram thereof.

The chain line in Figure 1 shows how the tape guides 13 and 14, the guide post 12, the guide roller 5 and the erasing head 16 can be moved together.

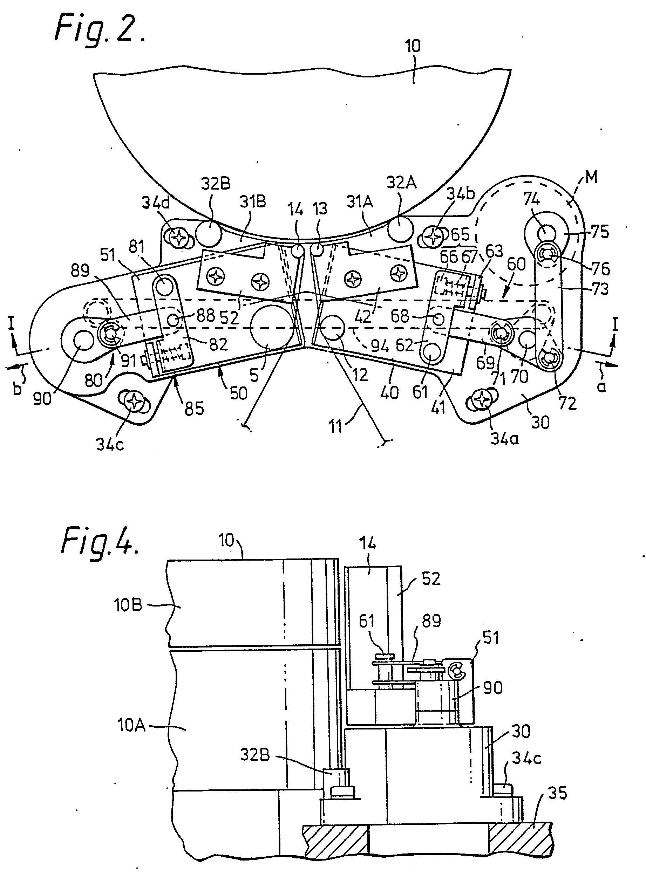

An example of a tape guide device according to the present invention will hereinafter be described with reference to Figure 2 and the following figures. The following description relates to the case where the pair of the tape guides 13 and 14, the guide post 12 and the guide roller 5 are constructed as movable.

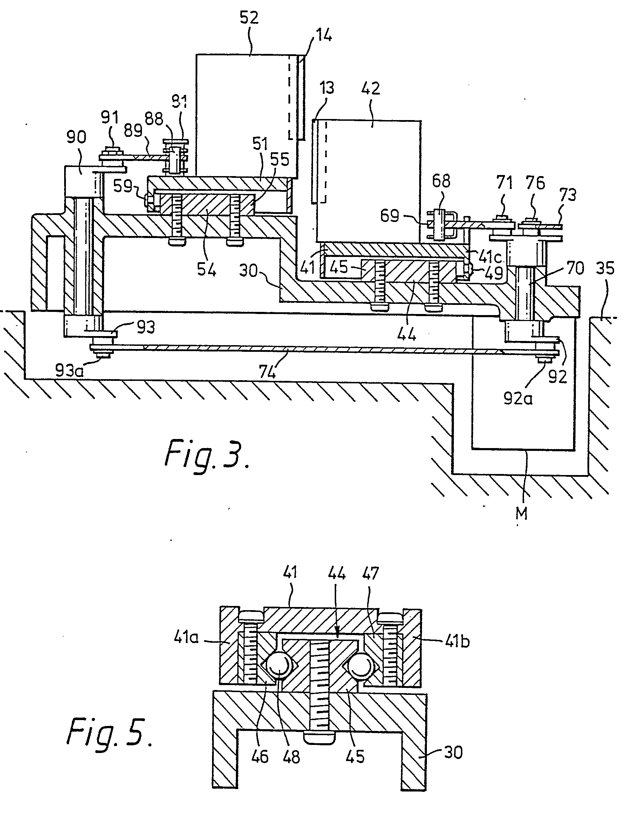

As shown in Figure 2, there is provided a fixed base or base plate 30 at a predetermined position on the external periphery of the drum 10. The fixed base 30 has a predetermined step and its cross-section is formed to be substantially crank-shape, so that its plane on the tape feed side is higher by a predetermined amount than its plane on its tape entry side as illustrated in Figure 3. This is because the tape 11 is wound around the drum 10 in order that the plane on the entry side of the tape 11 and the plane on the feed side of the tape 11 may have the predetermined steps, respectively.

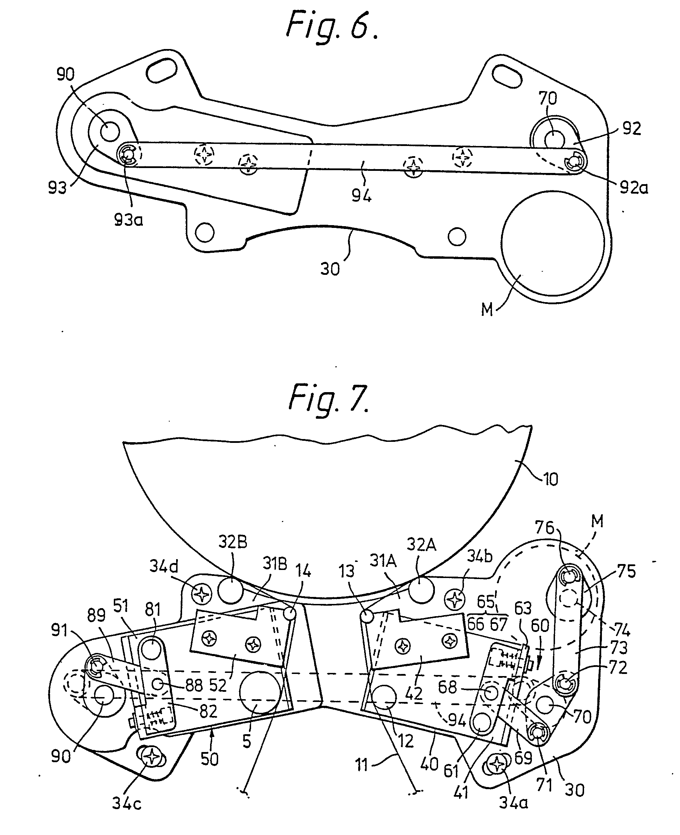

The end surface of the fixed base 30 opposing the drum 10 is formed nearly the same as the peripheral surface of the drum 10 and, as shown in Figure 4, fixed shafts 32A and 32B of column shape (as to the fixed shaft 32A, refer to Figure 2) are provided at predetermined positions of the end surfaces 31A and 31B which form the planes of the tape entry and feed sides so as to abut the external surface of a lower drum 10A.

As will be described later, these shafts 32A and 32B are the locating members of the fixed base 30 for the drum 10 which are used to position the pair of tape guides 13 and 14 provided on the fixed base 30 relative to the drum 10 whereby the fixed base 30, in the condition that the fixed shafts 32A and 32B are abutted to the lower drum 10A, is slightly displaced right and left so that the locations of the tape guides 13 and 14 relative to the drum 10 can be correctly adjusted.

The reason why such adjusting method is adopted is as follows. In a VTR with the type C format, since a video record vertical-interval dropout location, or position and dropout amount (10 + 0.25 horizontal lines) are standardized by the SMPTE it is desirable to adjust only the dropout position correctly without changing the dropout amount.

After the attached position being adjusted, the fixed base 30 is secured to a chassis 35 by screws 34a to 34d.

On the upper plane of the fixed base 30 guide attaching members or bodies 40 and 50 are provided so as to be freely movable which install the tape guides 13 and 14 thereon. Since these guide attaching members 40 and 50 are constructed the same as one other, a description will be given by one of these guide attaching members 40 and 50, for example, the guide attaching member 40 located on the tape entry side for installing the tape guide 13 and description of the guide attaching member 50 will be omitted for simplicity. The guide attaching member 40 mounted on the tape entry side includes a slide plate 41 which can move in a direction (shown by an arrow *a* in Figure 2) parallel to a cutting-plane line I—I in Figure 2 and an adjusting mechanism 42 of the tape guide 13 provided proximate the drum 10 on the upper plane of the slide plate 41.

As is well-known in the prior art, the adjusting mechanism 42 is so formed that its height and inclination can be adjusted independently and the tape guide 13 is attached to the corner of the adjusting mechanism 42 as seen in Figure 2 and 4.

The slide plate 41 is constructed in such a manner that it can be slid by a predetermined distance in the direction shown by the arrow *a* in Figure 2 using a sliding mechanism 44 as illustrated in Figure 5. In this example, is a sliding plate 41, having a reversed U-shape cross-section is used. The sliding mechanism 44 is disposed within the U-shape surrounded by both end portions 41a and 41b. As shown in the figure, the sliding mechanism 44 is comprised of an inside race 45 attached to the fixed base 30 in which V-shape grooves are formed on both side surfaces and outside races 46 and 47 attached to the inner surfaces of the end portions 41a and 41b which include V-shape grooves likewise. Between the spaces defined by the inside and outside races 45 to 47 are inserted balls 48 as illustrated in Figure 5 thereby enabling the slide plate 41 to be slid in the direction shown by the arrow *a* by a predetermined distance without shaking the slide plate 41.

In this case, as shown in Figure 3, at another end portion 41C of the slide plate 41 is attached a column-shaped stop 49 having a predetermined diameter so as to oppose the inside race 45. The projected length of the stop 49 is so selected that the inside race 45 may closely contact the stop 49 at the extreme sliding position where the slide plate 41 is as seen in Figure 2.

By these arrangements, even if the tape guide 13 is constructed to be freely movable, when the tape guide 13 is slid to the position as shown in Figure 2, the position, the height and the inclination of the tape guide 13 always meet the position, the height and the inclination specified beforehand. Accordingly, it is not necessary to adjust the height and so on of the tape guide each time the tape is put on the drum.

Since the inside race 45 and the stop 49 are enclosed within the slide plate 41, dust does not affect the slide's operation and the stop positions of the slide plate 41.

As shown in Figure 2, the aforesaid slide plate 41 driven by a motor M. Numeral 60 generally denotes a transmitting force from the motor M to the slide plate 41 in which one end of a lever 62 is attached to a fulcrum 61 located in a predetermined position on the slide plate 41 and between the other end thereof and a fixed plate 63 attached to the slide plate 41 is located a pressure setting mechanism 65 for setting the force to be applied to the movable lever 62 as constant, which mechanism includes a stepped bar 66 and a pressure spring 67.

At a fulcrum 68 located in the center of the movable lever 62 is attached a first link 69 and the other end of the first link 69 is attached to a fulcrum 71 on one flange of a central shaft 70 which is pivotally fixed to the fixed base 30. At a fulcrum 72 on another flange is attached a second link 73 and the other end of this second link 73 is attached to a rotary shaft 74 of the motor M. Numeral 75 designates an attaching arm thereof and 76 designates a fulcrum thereof.

In this case, the guide post 12 is attached to this slide plate 41.

The guide attaching member 50 for the other tape guide 14 is also constructed as described above, and is slidably moved in a direction shown by an arrow *b* in Figure 2. Numeral 51 represents a slide plate and 52 represents a guide adjusting mechanism thereof. Also, as shown in Figure 3, numeral 59 represents a stop. On the guide attaching member 50 is located a second transmitting mechanism 80 for transmitting the rotational force of the motor M to the slide plate 51 in which numeral 82 denotes a movable lever, 89 a third link and numeral 90 denotes a central shaft located on the fixed base 30. Numerals 81, 88 and 91 each denote fulcrums. In this case, the guide roller 5 is provided on the slide plate 51.

These guide attaching members 40 and 50 are so constructed that they become respectively spaced apart from the peripheral surface of the drum 10 when the rotation force of the motor M is transmitted thereto. To this end, at the respective lower ends of the central shafts 70 and 90 are attached arms 92 and 93 as illustrated in Figure 6. Between their fulcrums 92a and 93a is stretched a fourth link 94. In that case, this fourth link 94 extends under the fixed base 30 (refer to Figure 3).

Accordingly, if the motor M makes a half turn from the state shown in Figure 2 in the anti-clockwise direction whereby the central shaft 70 is urged to rotate in the anti-clockwise direction by a predetermined angle, so that this rotation force is transmitted to the slide plate 41 by way of the first link 69 thereby allowing the slide plate 41 to be slid to the right side by a predetermined distance. Figure 7 shows the slide plate 41 slid to the state as described above.

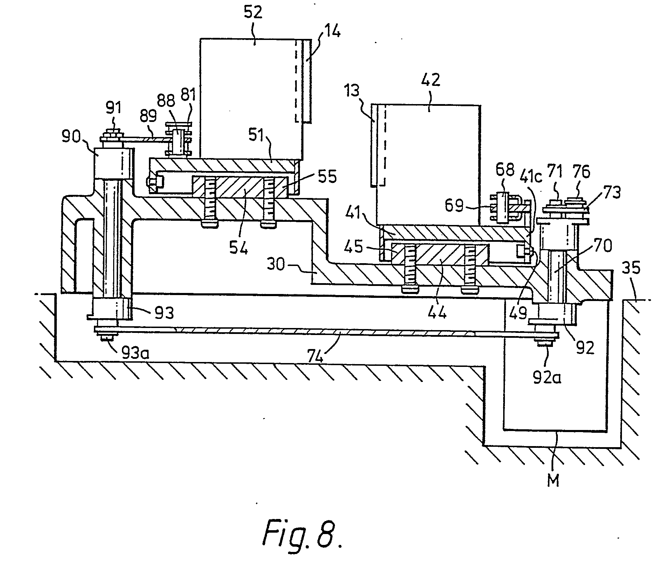

When the central shaft 70 is turned in the anti-clockwise direction, another central shaft 90 is likewise forced to rotate in the anti-clockwise direction through the fourth link 94, by which the third link 89 draws the slide plate 51 near the central shaft 90 side, thus causing the tape guide 14 to depart from the drum 10 by a predetermined distance (refer to Figs. 7 and 8).

As depicted above, to load the tape 11 on the drum 10, the motor M is just driven so that the tape guides 13 and 14, the guide post 12 and the guide roller 5 are respectively spaced apart in the respective directions shown by the arrows *a* and *b* in Figure 2 thereby to permit the width between tape guides 13 and 14, the width between the guide post 12 and the guide roller 5 and the width between the drum 10 and the tape guides 13, 14 to be widened or enlarged respectively and then the loading of the tape 11 can be performed quite easily.

After the tape 11 is put on the drum 10, if the motor M makes a further half turn, the slide plates 41 and 51 are returned at the same time to the positions as shown in Figure 2. At that time, the respective slide plates 41 and 51 are provided with the stop 49 and 59 as shown in Figure 3. Therefore, since these slide plates 41 and 51 can be slid until the stop 49 and 59 thereof closely contact the inside races 45 and 55 and, in addition, it is so designed that no shake will be caused in the directions perpendicular to the sliding directions of the sliding mechanisms 44 and 54, it is possible to locate the slide planes 41 and 51 always at the specified positions.

It does not matter if the motor M attempts to exert too much force on the slide plates 41 and 51 as these are provided with the pressure setting mechanisms 65 and 85 to cope with this. Accordingly, it does not matter at all even if the motor M rotates slightly beyond the rotational position specified.

As described above, in accordance with the embodiment of the present invention, since the tape guides 13 and 14 are adapted to depart from the drum 10 during the loading of the tape, it is quite easy to put the tape 11 on the drum 10. In addition, damage to the tape 11 can be prevented.

Further, if, in the illustrated embodiment of the present invention, the guide post 12 and the guide roller 5 adjacent to the tape guides 13 and 14 and the tape guides 13 and 14 themselves are all detached from the drum 10, the loading of the tape becomes easier than ever. Then, if the full track erasing head 16 is moved to the position as shown by the chained line in Figure 1 in addition to the provision of the sliding mechanism according to the present invention, needless to say that the loading of the tape can be carried our more easily.

Also, since the guide attaching members 40 and 50 are mounted on the fixed base 30, even when the fixed base 30 is moved, the position of the dropout in the video signal can be finely adjusted with accuracy while the dropout amount of the video signal is not changed. In this case, when the motor M is mounted on the chassis 35, it is required to adjust the relation between the motor M and the transmitting mechanism 60 each time the fixed base 30 is adjusted. But there is no such necessity with the illustrated tape guide device.

Further, while in the above described embodiment the present invention has been described as applied to the tape guide device of a VTR having the SMPTE type-C format, the present invention is also applicable to the tape guide device of other VTRs with the same effect.

## Claims

1. A tape guide device in which a tape is omega-wrapped around the periphery of a drum (10) by a pair of tape guides (13, 14) spaced a short distance from the periphery of the drum, the device comprising a fixed base (30) located in a predetermined position relative to the external periphery of the drum and a pair of guide attaching members (40, 50) provided on an upper plane thereof to attach said tape guides, characterised in that the guide attaching members are freely movable relative to said fixed base, and the arrangement is such that while the tape is being wrapped around on said drum, said guide attaching members are moved to be spaced by a predetermined larger distance from said periphery of the drum.

2. A tape guide device claimed in claim 1 further comprising linear slide means (Figure 5) coupled between said fixed base and said guide attaching members for permitting linear relative movement thereof.

3. A tape guide device claimed in claim 1 or 2 wherein said fixed base includes a pair of positioning members (32A, 32B) abutted to a part of said drum.

4. A tape guide device claimed in claim 1, 2 or 3 further comprising drive means (M) mounted on said fixed base, and means (60) for coupling said drive means to said guide attaching members so as to move said guide attaching members.

5. A video tape recorder incorporating a device according to any one of the preceding claims.

## Patentansprüche

1. Magnetbandführungseinrichtung, in der ein Magnetband (11) mittels eines Paares von Magnetbandführungen (13, 14), die mit einem geringen Abstand von dem Umfang einer Trommel (10) angeordnet sind, Omega-förmig um den Umfang dieser Trommel (10) gewickelt wird, mit einem feststehenden Basisteil (30), das in einer vorbestimmten Position relativ zu dem äußeren Umfang der Trommel (10) angeordnet ist, und mit einem Paar von Führungsbefestigungsteilen (40, 50), die in einer oberen Ebene desselben zum Befestigen der Magnetbandführungen (13, 14) angeordnet sind, dadurch gekennzeichnet, daß die Führungsbefestigungsteils (40, 50) frei beweglich relativ zu dem feststehenden Basisteil (30) sind und daß die Anordnung derart ausgebildet ist, daß die Führungsbefestigungsteile (40, 50) — während das Magnetband (11) um die Trommel (10) gewickelt wird — bewegt werden, um einem um einen vorbestimmten Betrag größeren Abstand von dem Umfang der Trommel (10) einzunehmen.

2. Magnetbandführungseinrichtung nach Anspruch 1, dadurch gekennzeichnet, daß eine geradlinig ausgebildete Schieberplatte (41 (Fig. 5), 51) zwischen dem feststehenden Basisteil (30) und dem Führungsbefestigungsteil (40 bzw. 50) derart angeordnet ist, daß sie eine geradlinige Bewegung relativ zu diesen Teilen ausführen kann.

3. Magnetbandführungseinrichtung nach Anspruch 1 oder 2, dadurch gekennzeichnet, daß ein Paar von Positionierungselementen (32A, 32B), die jeweils an einem Teilabschnitt der Trommel (10) anliegen, vorgesehen sind.

4. Magnetbandführungseinrichtung nach Anspruch 1, 2 oder 3, dadurch gekennzeichnet, daß ein Antriebsmittel (M) vorgesehen ist, das an dem feststehenden Basisteil (30) angebracht ist, und daß ein Mittel (60) zum Verbinden des Antriebsmittels (M) mit den Führungsbefestigungsteilen (40, 50) vorgesehen ist.

5. Video-Magnetbandrecorder, der eine Magnetbandführungseinrichtung nach einem der vorhergehenden Ansprüche enthält.

**Revendications**

1. Dispositif de guidage de bande dans lequel une bande est enroulée en oméga autour de la périphérie d'un tambour (10) au moyen d'une paire de guides de bande (13, 14) situés à une courte distance de la périphérie du tambour, le dispositif comportant une embase fixe (30) située à une position prédéterminée par rapport à la périphérie externe du tambour et une paire de pièces de fixation des guides (40, 50), prévues sur le plan supérieur de l'embase pour fixer lesdits guides de bande, caractérisé en ce que les pièces de fixation des guides peuvent se déplacer librement par rapport à ladite embase fixe, et que la disposition est telle que, pendant que l'on enroule la bande autour du dit tambour, lesdites pièces de fixation des guides se déplacent pour se situer à une distance prédéterminée, plus grande, de ladite périphérie du tambour.

2. Dispositif de guidage de bande selon la revendication 1, comportant en outre des moyens de coulissement linéaire (figure 5) couplés entre ladite embase fixe et lesdites pièces de fixation des guides pour permettre le mouvement linéaire relatif de ces pièces.

3. Dispositif de guidage de bande selon la revendication 1 ou la revendication 2, où ladite embase fixe inclut une paire de pièces de positionnement (32A, 32B) qui butent sur une partie dudit tambour.

4. Dispositif de guidage de bande selon les revendications 1, 2 ou 3, comprenant en outre des moyens d'entraînement (M) montés sur ladite embase fixe et des moyens (60) pour coupler lesdits moyens d'entrainement auxdites pièces de fixation des guides de façon à déplacer lesdites pièces de fixation des guides.

5. Magnétoscope incorporant un dispositif selon l'une quelconque des revendications précédentes.

Fig.1.

0 058 521

# Fig. 2.

# Fig. 4.

Fig. 3.

Fig. 5.

## Fig. 6.

## Fig. 7.

4

Fig. 8.